**Europäisches Patentamt**

**European Patent Office**

**Office européen des brevets**

(19)

(11) Numéro de publication: **0 019 495**
**B1**

(12) **FASCICULE DE BREVET EUROPEEN**

(45) Date de publication du fascicule de brevet: **04.11.81**

(21) Numéro de dépôt: **80400382.0**

(22) Date de dépôt: **21.03.80**

(51) Int. Cl.³: **B 60 K 37/02**, B 60 Q 3/04, H 05 B 33/08

(54) Dispositif d'affichage pour tableau de bord d'un véhicule automobile.

(30) Priorité: **11.05.79 FR 7912073**

(43) Date de publication de la demande:
**26.11.80 Bulletin 80/24**

(45) Mention de la délivrance du brevet:
**04.11.81 Bulletin 81/44**

(84) Etats Contractants Désignés:
**DE GB IT SE**

(56) Documents cités:
**IBM TECHNICAL DISCLOSURE BULLETIN, vol. 8, n° 11, avril 1966 NEW YORK (US) R.W. LANDAUER: "Electroluminescent display", pages 1569 et 1570**

(73) Titulaire: **REGIE NATIONALE DES USINES RENAULT**
**Boite postale 103 8-10 avenue Emile Zola**
**F-92109 Boulogne-Billancourt (FR)**

(72) Inventeur: **Coste, Jean-Claude**
**4 Square Saint-Germain**
**F-78160 Marly le Roi (FR)**

(74) Mandataire: **Jacques, Max et al,**
**RNUR - S. 0804 BP 103**
**F-92109 Boulogne Billancourt (FR)**

Courier Press, Leamington Spa, England.

Dispositif d'affichage pour tableau de bord d'un véhicule automobile.

La présente invention, due à la collaboration de M. Jean-Claude COSTE, est relative à des perfectionnements à l'affichage d'information au tableau de bord véhicule.

Il est connu d'utiliser au tableau de bord de tout véhicule automobile des dispositifs de contrôle et de signalisation dans lesquels le cadran gradué est pourvu d'une série de témoins lumineux en regard de tout ou partie des graduations, le témoin allumé, à un instant donné, donnant au conducteur la possibilité de lire la graduation la plus proche du cadran, donnant par exemple une information sur la vitesse du véhicule. Comme témoins lumineux, il est connu d'utiliser des diodes électroluminescentes en liaison avec un nombre de fils de liaison au moins égal à celui des diodes prévues sur le cadran. Or, un des graves problèmes qui se posent actuellement, alors que se développe de manière continue l'équipement électrique et électronique des véhicules, c'est la multiplication des conducteurs électriques constituant des écheveaux que l'on ne sait plus où loger.

La présente invention permet d'apporter un remède à cet état de choses par le fait qu'elle préconise un moyen d'alimenter n (n — 1) diodes électroluminescentes avec seulement *n* conducteurs, *n* étant tout nombre entier différent de zéro.

Suivant la présente invention, le dispositif d'affichage, par exemple pour tableau de bord d'un véhicule automobile qui est du type comportant des témoins lumineux tels que, par exemple, des diodes électroluminescentes et des conducteurs d'alimentation, est remarquable en ce qu'il comprend: *n* conducteurs d'alimentation en parallèle, *n* étant tout nombre entier au moins égal à deux, entre lesquels, ces conducteurs étant pris deux par deux, sont connectées tête-bêche deux diodes électroluminescentes en parallèle, et des moyens pur alimenter chacun des conducteurs suivant 3 tensions différentes, à savoir: état haut, état bas et état haute impédance.

Suivant un premier mode de réalisation, les moyens pour alimenter chacun des conducteurs, suivant trois tensions différentes, comprennent, pour chaque conducteur, la connexion en série entre une source de tension positive et la masse: d'une résistance et de l'espace collecteur-émetteur de deux transistors successifs dont le point commun est connecté au conducteur à alimenter et dont les bases sont reliées chacune à une source de tension de commande variable par l'intermédiaire d'une résistance en série.

Suivant un mode de réalisation préféré, les moyens pour alimenter chacun des conducteurs, suivant trois tensions différentes, comprennent pour chaque conducteur la connexion en série de deux adaptateurs "trois états" dont le point commun est relié au conducteur à alimenter. D'autres caractéristiques ressortiront de la description qui suit et qui n'est donnée qu'à titre d'exemple. A cet effet, on se reportera aux dessins joints dans lesquels:

— la figure 1 représente, suivant la présente invention, la manière dont est alimenté, à partir de quatre conducteurs principaux, un groupe de douze diodes électroluminescentes;

— la figure 2 illustre un premier mode de réalisation, permettant de communiquer à chacun des conducteurs principaux précédents un état déterminé, sélectionné parmi trois états possibles;

— la figure 3 illustre, dans son ensemble, un mode de réalisa-tion préféré, suivant la présente invention, du système d'alimentation des conducteurs principaux de la figure 1;

— la figure 4 illustre, agrandi, le système d'alimentation de chaque conducteur de la figure 3 selon le mode de réalisation préféré.

Les mêmes références numériques désignent les mêmes éléments sur les différentes figures.

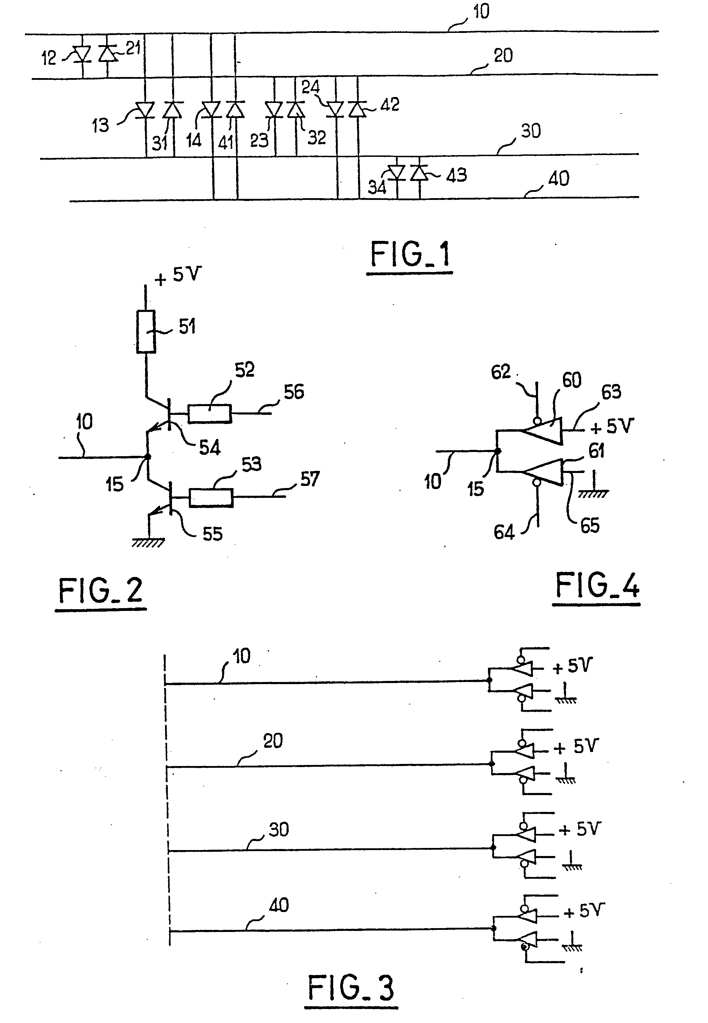

A la figure 1, on a représenté quatre conducteurs en parallèle, portant les références 10, 20, 30, 40. Entre ces conducteurs, pris deux par deux, sont connectées tête-bêche deux diodes électroluminescentes en parallèle, à savoir:

— entre les conducteurs 10 et 20: les diodes 12 et 21,

— entre les conducteurs 10 et 30: les diodes 13 et 31,

— entre les conducteurs 10 et 40: les diodes 14 et 41,

— entre les conducteurs 20 et 30: les diodes 23 et 32,

— entre les conducteurs 20 et 40: les diodes 24 et 42,

— entre les conducteurs 30 et 40: les diodes 34 et 43.

Si l'on suppose que l'on peut alimenter les conducteurs 10, 20, 30, 40 en signaux de commande à trois états, à savoir: état haut, état bas et état haute impédance, pour commander une diode électroluminescente, il faut une ligne à l'état haut, une ligne à l'état bas et deux lignes à haute impédance. Ainsi, si la ligne 10 est à l'état haut, la ligne 20 à l'état bas et les lignes 30 et 40 à l'état haute impédance, la diode électroluminescente 12 est allumée et toutes les autres sont éteintes.

La figure 2 illustre un premier moyen de réaliser une ligne trois états, par exemple sur le conducteur 10 de la figure 1. Dans ce but, on réalise, entre le plus 5 volts et la masse, un circuit comprenant en série successivement: une résistance 51, l'espace collecteur-émetteur d'un premier transistor 54, un point de jonction 15 avec le conducteur 10 et l'espace collecteur-émetteur d'un second transistor 55. La base du premier transistor 54 est connectée à une source de tension de commande variable 56 par l'intermédiaire d'une resistance 52 et la base du second transistor 55 est connectée également à une seconde source de tension variable 57 par l'intermédiaire d'une résistance 53. La présence de la résistance 51 a pour but de limiter la valeur du courant dans les diodes électroluminescentes à une valeur qu'elles puissent supporter. Les résistances 52 et 53 limitent de la même manière la valeur du courant sur la base des transistors 54 et 55.

Il est évident pour l'homme de métier que, si:
— les tensions 56 et 57 sont nulles, le conducteur 10 est à haute impédance,
— la tension 56 est nulle et la tension 57 est égale à un, le conducteur 10 est à l'état bas,
— la tension 56 est égale à un et la tension 57 est nulle, le conducteur 10 est à l'état haut.

Chacun des conducteurs 10, 20 30 40 de la figure 1 étant équipé d'un circuit tel que celui illustré à la figure 2, en pilotant les tensions respectives 56 et 57 à l'aide d'un circuit logique approprié, on voit qu'on a bien révélé un moyen pour mettre chacun desdits conducteurs dans l'état désiré, choisi parmi les trois états: état haut, état bas et état haute impédance et qu'en conséquence on est capable de rendre lumineuse celle que l'on désire parmi les douze diodes électroluminescentes de la figure 1, uniquement en agissant sur l'état des conducteurs 10, 20, 30 et 40.

La figure 3 illustre un second mode de réalisation qui est un mode préféré et suivant lequel les transistors de la figure 2 sont remplacés par des adaptateurs "trois états", par exemple des circuits amplificateurs du type 74 125 au catalogue de TEXAS INSTRUMENTS.

La figure 4 illustre, de manière agrandie, le détail du circuit d'alimentation associé, par exemple, au conducteur 10. On voit que deux adaptateurs "trois états" 60 et 61 remplacent les deux transistors 54 et 55 de la figure 2.

Si l'on raisonne sur une seule porte 60 avec ses trois conducteurs associés respectivement 62, 63 et 10:
— si le conducteur 62 est à l'état haut, le conducteur 10 est à l'état haute impédance,
— si le conducteur 62 est à l'état bas:
. le conducteur 10 est à l'état haut si le conducteur 63 est à l'état haut,
. le conducteur 10 est à l'état bas si le conducteur 63 est à l'état bas.

Considérant, à présent, l'ensemble de la figure 4, on en déduit que:
— le conducteur 10 est à haute impédance si les conducteurs 62 et 64 sont à l'état haut,
— le conducteur 10 est à l'état haut si le conducteur 62 est à l'état bas et le conducteur 64 à l'état haut,
— le conducteur 10 est à l'état bas si le conducteur 62 est à l'état haut et le conducteur 64 à l'état bas.

Dans le mode de réalisation, suivant l'invention, on peut mettre le conducteur 63 de la porte 60 à la tension plus 5 volts et le conducteur 65, correspondant de la porte 61, à la masse comme représenté à la figure 4. Dans cette dernière hypothèse, la figure 3 représente l'ensemble des conducteurs 10, 20, 30, 40 d'alimentation des diodes électroluminescentes et les circuits d'alimentation associés comportent chacun deux portes à trois états.

Avec des circuits d'alimentation tels que représentés à la figure 4, le courant qui passe dans la diode électroluminescente, que l'on désire éclairer, est de l'ordre de 22 mA.

Pour faire varier la luminosité des diodes électroluminescentes, on peut:
— soit moduler le signal de commande 62 pour la ligne 10, en faisant varier le rapport cyclique.
— soit insérer une résistance en série sur les lignes.

De cette manière, on fait une économie de l'ordre de 66% sur la longueur totale des conducteurs électriques nécessaires à la mise en oeuvre du dispositif d'affichage.

**Revendications**

1. Dispositif d'affichage, par exemple pour tableau de bord d'un véhicule automobile du type comportant des témoins lumineux, par exemple des diodes électroluminescentes et des conducteurs d'alimentation, caractérisé en ce qu'il comprend: $n$ conducteurs d'alimentation en parallèle, $n$ étant tout nombre entier au moins égal à deux, entre lesquels, ces conducteurs étant pris deux à deux, sont connectées tête-bêche deux diodes électroluminescentes en parallèle, et des moyens pour alimenter chacun des conducteurs suivant trois tensions différentes, à savoir: état haut, état bas et état haute impédance.

2. Dispositif d'affichage suivant la revendication 1, caractérisé en ce que les moyens, pour alimenter chacun des conducteurs (10, 20, 30, 40) suivant trois tensions différentes, comprennent, pour chaque conducteur, la connexion en série entre une source de tension positive et la masse: d'une resistance (51) et de l'espace collecteur-émetteur de deux transistors successifs (54, 55) dont le point commun (15) est connecté au conducteur à alimenter (10) et dont les bases sont reliées chacune à une source de tension de commande (56, 57) par l'intermédiaire d'une résistance en série (52, 53).

3. Dispositif d'affichage suivant la revendication 1, caractérisé en ce que les moyens, pour alimenter chacun des conducteurs (10, 20, 30, 40) suivant trois tensions différentes, comprennent, pour chaque conducteur, la connexion en série de deux adaptateurs "trois états" (60, 61) dont le point commun (15) est connecté au conducteur à alimenter (10).

**Claims**

1. A display device, for example for the instrument board of a motor vehicle, of the type comprising light tell-tales, for example light-emitting diodes and supply conductors, characterised in that it comprises: n supply conductors in parallel, n being any integer which is at least two, between which, said conductors being taken in pairs, two light-emitting diodes are connected in parallel opposition to each other, and means for supplying each of the conductors at three different voltages, namely, high state, low state and high-impedance state.

2. A display device according to claim 1 characterised in that the means for supplying each of the conductors (10, 20, 30, 40) at three different voltages comprise for each conductor, the series connection between a positive voltage source and earth, of a resistor (51) and the collector-emitter path of two successive transistors (54, 55), the common junction (15) of which is connected to the conductor (10) to be supplied and the bases of which are each connected to a control voltage source (56, 57) by way of a series resistor (52, 53).

3. A display device according to claim 1 characterised in that the means for supplying each of the conductors (10, 20, 30, 40) at three different voltages comprise, for each conductor, the series connection of two 'three state' adaptors (60, 61), the common junction (15) of which is connected to the conductor (10) to be supplied.

**Patentansprüche**

1. Anzeigevorrichtung, z.B. für das Instrumentenbrett eines Kraftfahrzeuges, mit Lichtanzeigern, z.B. Lumineszenzdioden, sowie mit Versorgungsleitungen, dadurch gekennzeichnet, daß sie n parallel geschaltete Versorgungsleitungen aufweist, wobei n eine ganze Zahl und mindestens gleich 2 ist, und daß zwischen je zwei Paaren von Versorgungsleitungen zwei Elektro-Lumineszenzdioden gegensinnig parallel geschaltet sind, und daß eine Anordnung vorgesehen ist um jeder der Leitungen mit einer von drei unterschiedlichen Spannungen zu beaufschlagen, so daß sie einen hohen Zustand oder einen niedrigen Zustand oder einen Zustand hoher Impedanz aufweist.

2. Anzeigevorrichtung nach Anspruch 1, dadurch gekennzeichnet, daß die Anordnung zur Beaufschlagung einer jeden Leitung (10, 20, 30, 40) mit einer von drei unterschiedlichen Spannungen folgende, zwischen einer positiven Spannungsquelle und der Masse angeordnete Reihenschaltung aufweist: einen Widerstand (51), der mit den Kollektor-Emitter-Strecken von zwei aufeinanderfolgenden Transistoren (54, 55) verbunden ist, deren gemeinsamer Verbindungspunkt (15) mit der zu beaufschlagenden Leitung (10) verbunden ist, wobei die Basen jeweils mit einer Steuerspannungsquelle (56, 57) über je einen in Reihe geschalteten Widerstand (52, 53) verbunden sind.

3. Anzeigevorrichtung nach Anspruch 1, dadurch gekennzeichnet, daß die Anordnung zur Beaufschlagung einer jeden Leitung (10, 20, 30, 40) mit einer von drei unterschiedlichen Spannungen für jede Leitung eine Reihenschaltung von zwei Bauteilen mit "drei Zuständen" (60, 61) aufweist, deren gemeinsamer Verbindungspunkt (15) mit der zu beaufschlagenden Leitung (10) verbunden ist.

FIG_1

FIG_2

FIG_4

FIG_3